# FASCICULE DE BREVET EUROPEEN

(11) **EP 2 730 155 B1**
(45) Date de publication et mention de la délivrance du brevet: **23.01.2019**
(21) Numéro de dépôt: 13191776.7
(22) Date de dépôt: 06.11.2013
(51) Int. Cl.: A01B 29/04, B60C 7/24, B60C 11/03, B60C 17/00, B60C 7/14, B60C 7/12

(54) **Pneumatique semi-creux à profil amélioré et organe roulant équipé de tels pneumatiques**
Halbhohlreifen mit verbessertem Profil, und Rollvorrichtung, die mit solchen Reifen ausgestattet ist
Semi-hollow tyre with improved profile and rolling device provided with such tyres

(30) Priorité: 07.11.2012 FR 1202979
(43) Date de publication de la demande: 14.05.2014
(73) Titulaire: OTICO, 77650 Chalmaison (FR)
(72) Inventeur: Phely, Olivier, 77520 Thenisy (FR); Piou, Denis, 89340 Villeblevin (FR)
(74) Mandataire: Cabinet Netter

(56) Documents cités:
- EP-A1- 1 361 078
- EP-A1- 1 380 198
- EP-A2- 0 173 670
- DE-A1-102004 007 601
- DE-A1-102005 044 354
- FR-A- 409 854
- FR-A1- 2 776 239

## Description

L'invention concerne un pneumatique semi-creux et une roue ou un rouleau portant de tels pneumatiques permettant de travailler la terre.

Des matériels agricoles tels que des machines combinant des roues, des rouleaux, des semoirs, des outils de préparation du sol, etc., sont souvent équipés de pneumatiques spéciaux. Parmi ces pneumatiques, certains prennent la forme de pneumatiques du type semi-creux. Les pneumatiques semi-creux, aussi appelés bandages semi-creux, sont des pneumatiques dont l'enveloppe n'est pas gonflée. Les pneumatiques semi-creux sont en général propres à être enfilés autour d'une structure cylindrique et à venir en appui jointif les uns des autres. De tels pneumatiques sont par exemple décrits dans la demande de brevet français FR 2 763 279. Ces pneumatiques peuvent aussi être montés individuellement sur des jantes comme décrit par exemple dans FR 2 933 903.

Ce type de pneumatiques est satisfaisant. Néanmoins, dans certaines conditions de travail, le terrain collant, la terre humide ou la boue tendent à souiller les équipements et à réduire leur efficacité. Pour nettoyer les pneumatiques en cours d'utilisation, il est connu d'utiliser des grattoirs ou racloirs métalliques. Les grattoirs métalliques sont de forme complémentaire de celle des pneumatiques et solidaires du châssis. La demanderesse a constaté que la présence de ces grattoirs augmentait les risques de détérioration et de perforation des pneumatiques. En cas de contact accidentel entre les grattoirs et les pneumatiques, ou en présence d'un caillou par exemple, les pneumatiques peuvent être détériorés. La demanderesse a donc cherché à réduire ces risques.

La demanderesse a conçu des pneumatiques de type semi-creux dont les propriétés d'auto-nettoyage permettent de se dispenser des grattoirs. Les profils des pneumatiques sont particulièrement adaptés pour que la bande de roulement préserve sa forme fonctionnelle en fonctionnement tandis que les flancs présentent une déformation importante. La bande de roulement en fonctionnement présente un mouvement dans la direction radiale dû à l'écrasement du pneumatique sous le poids de la machine agricole. Ce mouvement n'est pas nécessairement accompagné d'une déformation importante de la forme de la bande de roulement. Le déplacement radial de la bande de roulement améliore le décollement de la terre sans neutraliser l'efficacité de la machine agricole.

Certains fabricants de pneumatiques semi-creux ont cherché à limiter l'écrasement radial des pneumatiques, par exemple en rigidifiant une portion significative des flancs. De tels pneumatiques sont par exemple décrits dans la demande de brevet européenne EP 0 401 592. La demanderesse est allée à l'encontre de cet a priori et propose des pneumatiques dont la déformation en fonctionnement des flancs est augmentée de manière contrôlée.

Le document FR2776239 montre un pneumatique pour machine agricole selon le préambule de la revendication 1.

L'invention propose à cet effet un pneumatique pour machine agricole selon la revendication 1.

De tels pneumatiques présentent un comportement amélioré en utilisation en facilitant la déformation des flancs et le décollement de terre. L'efficacité du travail de la terre est améliorée.

Le pneumatique peut présenter les caractéristiques suivantes, seules ou en combinaison :
- la portion intermédiaire et la portion distale sont d'épaisseur sensiblement identique l'une par rapport à l'autre et homogène,
- la paroi de flanc présente, en section selon un plan comprenant l'axe de révolution du pneumatique à l'état déchargé, un profil en S,
- le pneumatique comprend en outre au moins une armature logée dans la semelle,
- la semelle et la portion distale de la paroi de flanc sont sensiblement alignées radialement, à l'état déchargé,
- selon une direction parallèle à l'axe de révolution, la semelle présente une dimension en largeur strictement supérieure à la distance maximale séparant les deux parois de flancs, à l'état déchargé,
- la portion intermédiaire est agencée pour s'étendre vers la chambre sous l'effet d'une compression radiale tandis que la portion distale est agencée pour s'étendre vers l'opposé de la chambre sous l'effet d'une compression radiale.

Selon un autre aspect de l'invention, il est proposé un organe roulant pour machine agricole. L'organe roulant comprend un support sensiblement cylindrique propre à tourner autour d'un axe et au moins un pneumatique tel que décrit précédemment monté autour du support.

L'organe roulant équipé de tels pneumatiques, par exemple un rouleau ou une roue, limite les risques de détérioration des outils résultant d'une accumulation de terre et débris sur, autour et entre les pneumatiques. La présence d'outils supplémentaires tels que des racloirs pour nettoyer les pneumatiques durant le travail devient optionnelle.

L'organe roulant peut présenter les caractéristiques suivantes, seules ou en combinaison :
- l'organe roulant comprend en outre au moins une entretoise montée autour du support, adjacente et au contact du pneumatique. Le pneumatique est maintenu à distance d'un autre pneumatique monté autour du support.
- le support prend la forme d'une jante autour de laquelle est monté le pneumatique.
- le support comprend un assemblage de jantes. Le pneumatique est monté autour d'au moins une des jantes.

La présente invention sera mieux comprise à la lecture de la description détaillée de quelques modes de réalisation pris à titre d'exemples nullement limitatifs et illustrée par les dessins annexés sur lesquels :
- la figure 1 est une vue de face d'un pneumatique selon l'invention, à l'état non chargé,
- la figure 2 est une vue de côté du pneumatique de la figure 1,
- la figure 3 est une vue en coupe axiale du pneumatique de la figure 1,
- la figure 4 est une vue de détail de la figure 3,
- la figure 5 est une vue de face d'un pneumatique selon l'invention, à l'état non chargé,
- la figure 6 est une vue en coupe axiale du pneumatique de la figure 5,
- la figure 7 est une vue en coupe axiale d'un pneumatique selon l'invention, à l'état non chargé,
- la figure 8 est une vue de détail de la figure 7,
- la figure 9 est une vue en coupe axiale d'un pneumatique selon l'invention, à l'état non chargé,
- la figure 10 est une vue de détail de la figure 9,
- la figure 11 est une vue en coupe axiale d'un pneumatique selon l'invention, à l'état non chargé,
- la figure 12 est une vue de détail de la figure 11,
- la figure 13 est une vue de face d'un rouleau comprenant des pneumatiques semblables à celui de la figure 1,
- la figure 14 est une vue en coupe axiale du rouleau de la figure 13,
- la figure 15 est une vue de face d'un rouleau comprenant des pneumatiques semblables à celui de la figure 1,
- la figure 16 est une vue en coupe axiale du rouleau de la figure 15,
- la figure 17 est une vue de face d'un rouleau comprenant des pneumatiques semblables à celui de la figure 1,
- la figure 18 est une vue en coupe axiale du rouleau de la figure 17,
- la figure 19 est une représentation schématique partielle en coupe d'un pneumatique selon l'invention,
- les figures 20 et 21 sont chacune des vues en coupe axiale d'un pneumatique selon l'invention monté sur une jante correspondante,
- les figures 22, 24 et 26 sont des vues en coupe axiale de pneumatiques selon l'invention, dans un état posé au sol mais non chargé, et
- les figures 23, 25 et 27 sont des vues en coupe axiale de pneumatiques selon l'invention, dans un état posé au sol et chargé.

Les dessins annexés sont pour l'essentiel de caractère certain, et pourront non seulement servir à compléter l'invention, mais aussi contribuer à sa définition le cas échéant. Il est relevé que des éléments comme la géométrie de profil de pneumatiques sont difficiles à définir complètement, autrement que par le dessin.

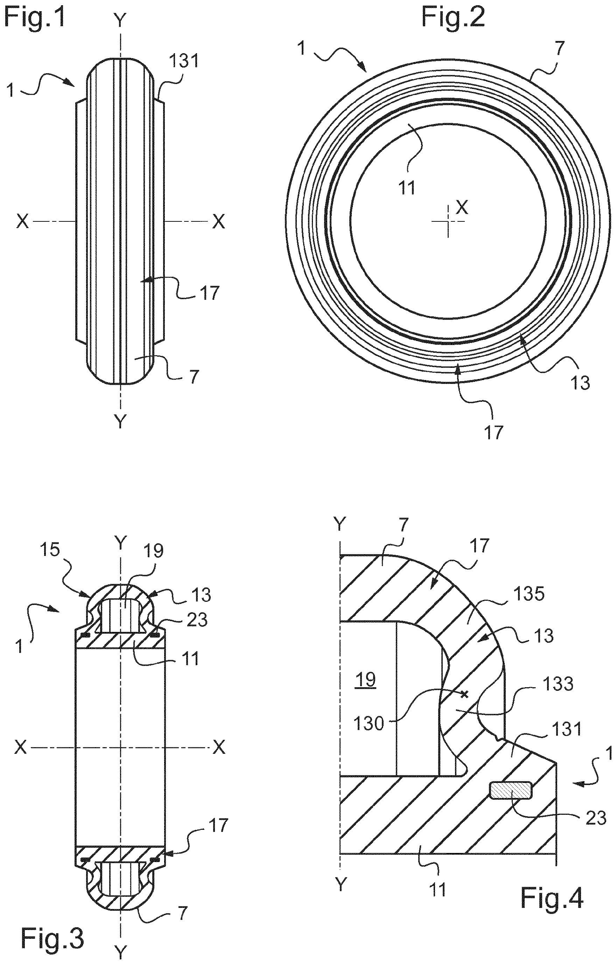

Il est fait référence aux cinq modes de réalisation représentés ici, c'est-à-dire respectivement aux figures 1 à 4, 5 et 6, 7 et 8, 9 et 10, 11 et 12. Le pneumatique 1 est destiné à être monté sur une machine agricole telle qu'un organe roulant 100 tracté et/ou porté par un véhicule non représenté, par exemple un tracteur. Par les termes "organe roulant" on désigne notamment des rouleaux et des roues, étant entendu qu'un rouleau peut comprendre lui-même un assemblage de plusieurs roues.

Le pneumatique 1 est, dans les exemples décrits ici, en état non chargé. Par non chargé on entend ici libéré de contraintes mécaniques extérieures, et notamment de celle de la résistance du sol au poids de la machine agricole. Le pneumatique 1 est dans un état non déformé.

Le pneumatique 1 présente une forme de révolution selon un axe XX. Dans les modes de réalisation des figures 1 à 4 d'une part et 11 et 12 d'autre part, le pneumatique 1 présente un profil sensiblement uniforme sur sa circonférence. Dans des variantes non représentées, le pneumatique 1 présente des exceptions à l'homogénéité circonférentielle, par exemple des inscriptions en creux et/ou en relief sur des portions latérales du pneumatique 1. De telles inscriptions peuvent indiquer une marque, des références, des dimensions, etc. En outre, des artéfacts de fabrication peuvent subsister sur le pneumatique 1 à l'état fini. Ces détails sont considérés comme quasi-négligeables quant au comportement mécanique du pneumatique 1. L'homogénéité circonférentielle du pneumatique 1 est considérée comme préservée.

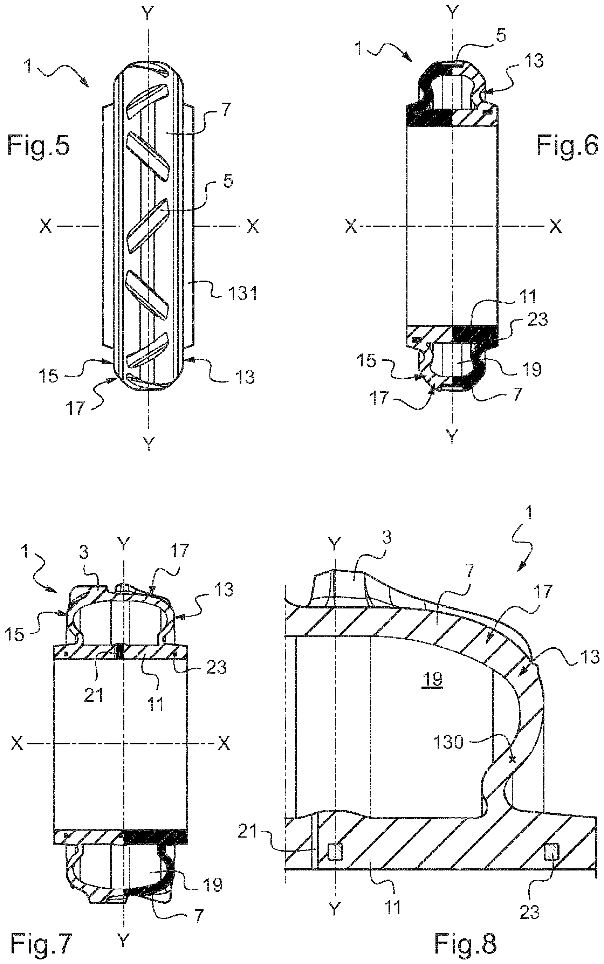

Dans d'autres modes de réalisation, par exemple ceux représentés aux figures 5 à 10, le pneumatique 1 peut comprendre des crampons 3 et des sculptures 5. Un orifice 21 utilisé lors de la vulcanisation peut subsister, cf. figures 7 à 10. De tels crampons 3, sculptures 5 et orifices 21 constituent des exceptions à l'homogénéité circonférentielle du pneumatique 1.

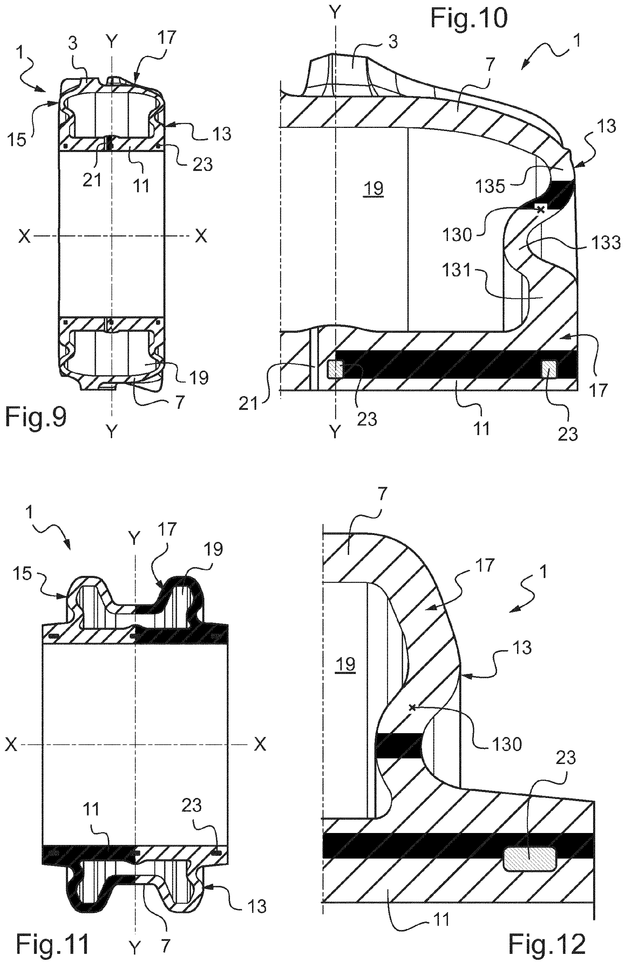

Le pneumatique 1 présente en outre un plan médian YY perpendiculaire à l'axe de révolution XX. Dans le mode de réalisation des figures 1 à 4 et dans celui des figures 11 et 12, le plan médian YY forme plan de symétrie du pneumatique 1. Dans les modes de réalisation des figures 5 à 10, le plan médian YY forme plan de symétrie du pneumatique 1 à l'exception du positionnement des crampons 3, des sculptures 5 et de l'orifice 21.

Le pneumatique 1 présente un profil semi-creux. Le pneumatique 1 comprend une bande de roulement 7, une semelle 11, et deux parois de flancs 13, 15. Les deux parois de flancs 13, 15 relient la bande de roulement 7 à la semelle 11. La bande de roulement 7, la semelle 11 et les deux parois de flancs 13, 15, forment ensemble une enveloppe 17. L'enveloppe 17 délimite une chambre 19 à l'intérieur du pneumatique 1.

La bande de roulement 7 est une paroi agencée pour entrer en contact avec le sol en fonctionnement. La bande de roulement 7 porte les crampons 3 et sculptures 5 des modes de réalisation des figures 5 à 10.

La semelle 11, ou fourreau, est une paroi sensiblement cylindrique agencée ici pour être mise en contact avec un support 101 de forme générale cylindrique appartenant à l'organe roulant 100. La forme sensiblement cylindrique de la semelle 11 est centrée sur l'axe de révolution XX. Dans les modes de réalisation représentés ici, la surface extérieure de la semelle 11 orientée vers l'axe de révolution XX, c'est-à-dire la surface radialement intérieure, est sensiblement lisse.

La chambre 19 est un espace annulaire creux délimité par la bande de roulement 7, la semelle 11 et les deux parois de flancs 13, 15. L'espace annulaire creux de la chambre 19 n'est pas gonflé mais peut communiquer avec le milieu ambiant au moyen de l'orifice 21 (visible en figures 8 et 10 par exemple) traversant l'épaisseur de la semelle 11. L'orifice 21 permettant l'équilibrage des pressions en utilisation peut être celui utilisé pour injecter de l'air sous pression lors de l'étape de vulcanisation à la fabrication du pneumatique 1 ou une ouverture dédiée.

La présence de l'orifice 21 mettant en communication la chambre 19 avec l'extérieur du pneumatique 1 permet l'équilibrage des pressions et facilite la déformation du pneumatique 1 en fonctionnement.

L'espace annulaire creux de la chambre 19 d'un pneumatique 1 occupe préférentiellement un volume inférieur au volume occupé par la matière constituant ledit pneumatique 1.

Dans les exemples décrits ici, la semelle 11 est mécaniquement renforcée par des armatures 23, ou joncs métalliques, noyées dans la matière du pneumatique 1. Les armatures 23 assurent un meilleur maintien du pneumatique 1 en dépit des sollicitations mécaniques subies par celui-ci. La semelle 11 présente une plus grande rigidité, une meilleure tenue que le reste du pneumatique 1 en fonctionnement.

Dans les modes de réalisation des figures 1 à 6, les armatures 23 sont au nombre de deux par semelle 11. Dans les modes de réalisation des figures 7 à 12, les armatures 23 sont au nombre de trois par semelle 11. Le nombre d'armatures 23 est adapté en fonction des dimensions axiales de la semelle 11. Les armatures 23 s'étendent sensiblement dans la circonférence du pneumatique 1.

Dans les exemples décrits ici, la première paroi de flanc 13 est le symétrique de la seconde paroi de flanc 15 par rapport au plan médian YY. Seule la première paroi de flanc 13 est décrite en détail dans la suite, cf. figures 4, 8, 10 et 12.

On se réfère aux figures 4, 8, 10 et 12, la coupe axiale permettant d'analyser les profils de pneumatique. La paroi de flanc 13 comprend, dans cet ordre et successivement selon une direction orientée radialement depuis l'axe de révolution XX vers l'extérieur, une portion proximale 131, une portion intermédiaire 133 et une portion distale 135. La portion proximale 131 est reliée à la semelle 11. La portion distale 135 est reliée à la bande de roulement 7. On désigne ici par "intérieur" les surfaces orientées vers la chambre 19 et par "extérieure" les surfaces opposées, orientées vers l'extérieur du pneumatique 1, y compris celle de la semelle 11 orientée radialement vers l'intérieur.

Comme cela est visible sur les figures 4, 8, 10 et 12, la portion intermédiaire 133 fait saillie dans la chambre 19 selon une direction sensiblement parallèle à l'axe de révolution XX. La portion intermédiaire 133 est concave. La portion proximale 131 et la portion distale 135 sont convexes. Vue de l'extérieur du pneumatique 1, la portion intermédiaire 133 prend la forme d'une cavité annulaire s'étendant sur la circonférence du pneumatique 1 tandis que vue depuis la chambre 19, l'intérieur du pneumatique 1, la portion intermédiaire 133 prend la forme d'un bourrelet annulaire s'étendant sur la circonférence du pneumatique 1.

La surface intérieure de la paroi de flanc 13 et la surface extérieure de la paroi de flanc 13 sont sensiblement continues. La continuité des surfaces permet de limiter le risque d'apparition de concentration de contrainte en fonctionnement. Les risques de détérioration ou de rupture à la suite de déformations sont limités.

Dans les exemples décrits ici, la portion intermédiaire 133 et la portion distale 135 sont d'épaisseurs sensiblement identiques l'une par rapport à l'autre. En outre, l'épaisseur de la portion intermédiaire 133 d'une part, et de la portion distale 135 d'autre part, est sensiblement homogène. En variante, les épaisseurs de la portion intermédiaire 133 et de la portion distale 135 sont différentes.

Comme cela est visible sur les figures 4, 8, 10 et 12 en section selon un plan comprenant l'axe de révolution XX du pneumatique 1, la paroi de flanc 13 présente un profil en S. À l'état déchargé, la paroi de flanc 13 présente un point d'inflexion 130. Ce point d'inflexion 130 marque la limite entre la portion intermédiaire 133 et la portion distale 135. En utilisation, une force sensiblement radiale est appliquée sur la bande de roulement 7 résultant du poids de la machine agricole sur le sol. Le pneumatique 1 est dit chargé. Sous cette action, la bande de roulement 7 et la semelle 11 ont tendance à être mutuellement rapprochées au niveau du point de contact avec le sol. En conséquence, les parois de flancs 13, 15 se déforment.

Outre le mouvement de rotation pure du pneumatique 1 autour de son axe de révolution XX en utilisation, le point d'inflexion 130 subit un déplacement principalement orienté selon une direction radiale. Le déplacement est orienté vers l'axe de révolution XX lors de la compression et vers l'opposé lors du relâchement. La composante axiale, c'est-à-dire parallèlement à l'axe de révolution XX, du déplacement du point d'inflexion 130 est faible par rapport à sa composante radiale. La portion distale 135 a tendance à se comprimer dans la direction radiale et à s'étendre dans la direction axiale et vers l'extérieur du pneumatique 1. La portion intermédiaire 133 a tendance à se comprimer dans une direction radiale et à s'étendre dans une direction axiale et vers la chambre 19.

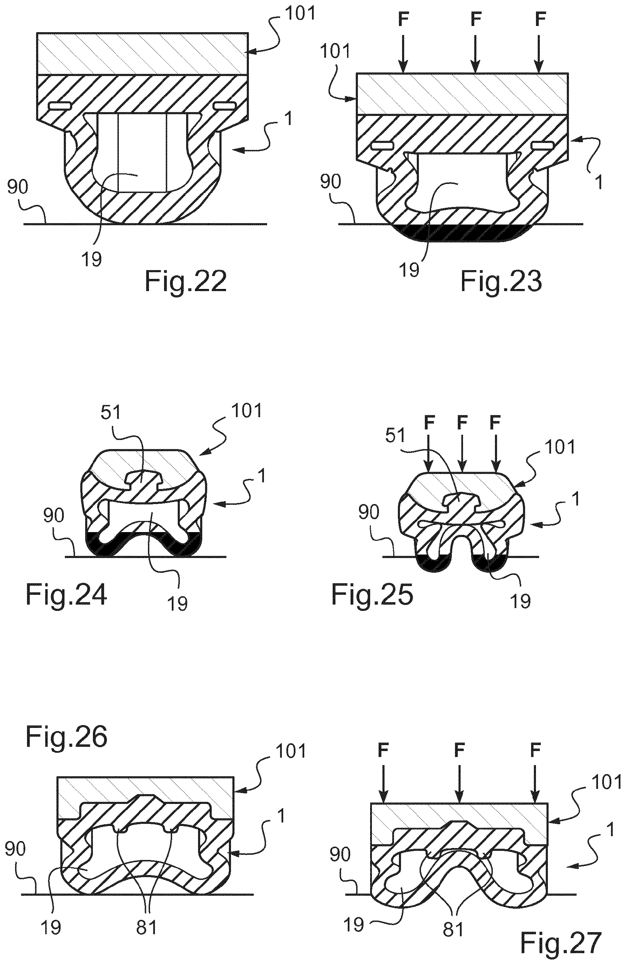

Les figures 22, 24 et 26 représentent chacune un pneumatique 1 porté par un support 101 rigide, au contact du sol 90 mais dans un état ou aucune force significative n'est appliquée. La figure 23, respectivement 25, respectivement 27, représente ce même pneumatique 1 sous l'effet d'une force sensiblement uniforme appliquée du haut vers le bas sur le support 101. Cette force est représentée par les flèches F sur les figures.

Le mode de réalisation des figures 26 et 27 comprend des butées 81 formant saillie dans la chambre 19 depuis la surface intérieure de la semelle 11. Une portion de la bande de roulement 7 vient en appui contre les butées 81 lorsque l'écrasement du pneumatique 1 est important.

Le déplacement axial moyen de l'ensemble paroi intermédiaire 133 et portion distale 135 est donc réduit. L'expansion axiale, c'est-à-dire l'augmentation de largeur du pneumatique 1 en fonctionnement est limitée. De manière imagée, les parois de flancs 13, 15 subissent une déformation "en accordéon" plutôt que de s'étendre seulement vers l'extérieur lors de la compression. Comme cela sera décrit par la suite, cette faible expansion axiale autorise une juxtaposition serrée des pneumatiques entre eux sur un organe roulant 100. Cette combinaison de déformations permet en outre un meilleur décollage de la terre depuis les surfaces extérieures du pneumatique 1.

La configuration de la portion proximale 131 peut être différente en fonction des modes de réalisation, comme cela est visible sur les figures 4, 8, 10 et 12. La portion proximale 131 assure la liaison mécanique entre la portion intermédiaire 133 et la semelle 11.

Dans la vue en coupe du mode de réalisation de la figure 10, la portion proximale 131 est d'épaisseur légèrement supérieure à celle de la portion intermédiaire 133 et de la portion distale 135. La portion proximale 131 s'étend sensiblement radialement depuis la semelle 11. La portion proximale 131 porte une surface extérieure en prolongement de la surface d'extrémité axiale de la semelle 11. Vues de l'extérieur du pneumatique 1, la semelle 11 et la portion proximale 131 peuvent être confondues.

Dans les modes de réalisation des figures 4, 8 et 12, la portion proximale 131 représente une faible proportion de la paroi de flanc 13. En outre, la surface extérieure de la portion proximale 131 et l'extrémité axiale de la semelle 11 à laquelle elle est liée sont disposées à une distance du plan médian YY supérieure à la distance séparant la surface extérieure de la portion distale 135 et le plan médian YY. Autrement dit, la largeur dans la direction axiale de la semelle 11 est strictement supérieure à la largeur du reste du pneumatique 1.

La paroi de flanc 13 du mode de réalisation des figures 11 et 12 ressemble à la paroi de flanc 13 des figures 1 à 4. La différence entre la largeur de la semelle 11 et la distance maximale séparant les deux parois de flancs 13, 15 est plus importante dans le mode de réalisation des figures 10 et 12 par rapport au mode de réalisation des figures 1 à 4.

Pour faciliter le décollement de la terre qui a tendance à adhérer au pneumatique 1, à la fois sur la bande de roulement 7 et sur les parois de flancs 13, 15, il est préférable que les deux parois de flancs 13, 15 se déforment en utilisation. Plus le déplacement dans la direction radiale de la bande de roulement 7 par rapport à la semelle 11 est important, plus le nettoyage par déformation est efficace. En outre, la dimension axiale du pneumatique 1 est maîtrisée au cours de son utilisation de sorte que la déformation n'entraîne pas ou peu d'élargissement du pneumatique 1. À l'état monté en organe roulant 100 et juxtaposé avec d'autres pneumatiques, l'extension axiale du pneumatique 1 est limitée.

L'invention peut être vue de la manière suivante. Chacune des deux parois de flancs 13, 15 porte une surface intérieure et une surface extérieure. Pour l'une au moins des parois de flancs 13, 15, la partie de la surface intérieure portée par la portion intermédiaire 133 est convexe. La partie de la surface extérieure portée par la portion intermédiaire 133 est concave. La partie de la surface intérieure portée par la portion distale 135 est concave. La partie de la surface extérieure portée par la portion distale 135 est convexe. Ladite paroi de flanc 13, 15 présente alors une déformation maîtrisée en fonctionnement pour faciliter le décollage de boue depuis le pneumatique 1.

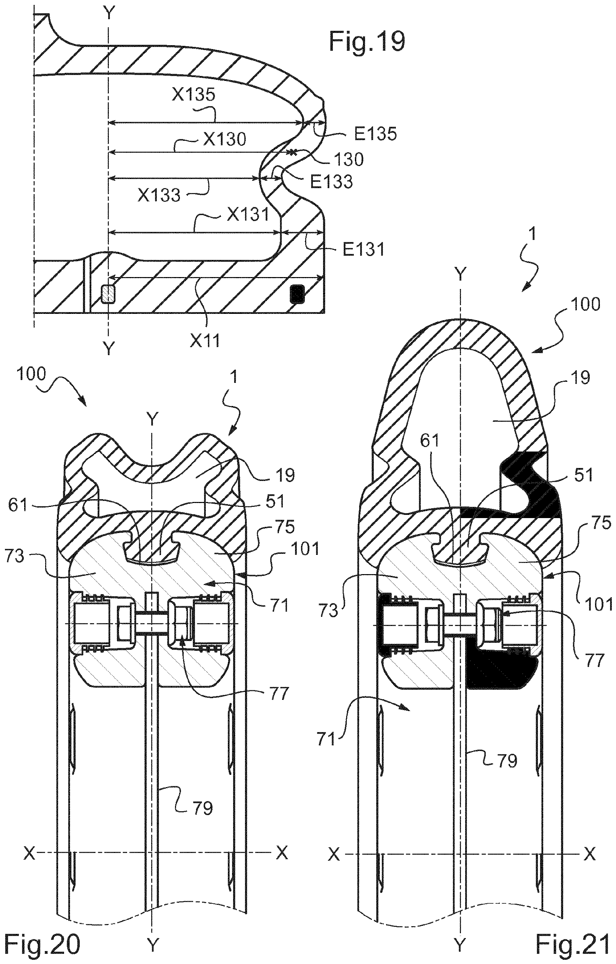

Une autre manière de définir l'invention est représentée en figure 19. Dans un état non chargé du pneumatique 1 et selon des directions parallèles à l'axe de révolution XX:
- la distance entre la surface d'extrémité axiale de la semelle 11 et le plan médian YY est référencée X11, cette dimension pouvant aussi être appelée demi-largeur de la semelle 11 ;
- la distance maximale entre la surface intérieure de la portion proximale 131 et le plan médian YY est référencée X131 ;
- la distance minimale entre la surface intérieure de la portion intermédiaire 133 et le plan médian YY est référencé X133 ;
- la distance maximale entre la surface intérieure de la portion distale 135 et le plan médian YY est référencée X135 ;
- l'épaisseur de la portion proximale 131 au niveau de la distance maximale X131 entre la surface intérieure de la portion proximale 131 et le plan médian YY est référencée E131 ;
- l'épaisseur de la portion intermédiaire 133 au niveau de la distance minimale X133 entre la surface intérieure de la portion intermédiaire 133 et le plan médian YY est référencée E133 ;
- l'épaisseur de la portion distale 135 au niveau de la distance minimale X135 entre la surface intérieure de la portion intermédiaire 133 et le plan médian YY est référencée E135.

On déduit alors que, respectivement pour la portion proximale 131, la portion intermédiaire 133 et la portion distale 135, la distance entre la surface extérieure d'une part et le plan médian YY d'autre part correspond à la somme de la distance entre la surface intérieure et le plan médian YY, respectivement X131, X133 et X135 à laquelle on ajoute l'épaisseur correspondante, respectivement E131, E133 et E135.

En cas de symétrie du pneumatique 1 par rapport au plan médian YY, la largeur du pneumatique 1 au niveau des différentes portions des parois de flanc 13, 15 se calcule en multipliant par deux la distance entre la plan médian YY et la surface extérieure correspondante.

La distance minimale X133 entre la surface intérieure de la portion intermédiaire 133 et le plan médian YY est strictement inférieure à la distance maximale X135 entre la surface intérieure de la portion distale 135 et le plan médian YY (X133 < X135). La distance minimale X133 + E133 entre la surface extérieure de la portion intermédiaire 133 et le plan médian YY est strictement inférieure à la distance maximale X135 + E135 entre la surface extérieure de la portion distale 135 et le plan médian YY (X133 + E133 < X135 + E135). La distance minimale X133 + E133 entre la surface extérieure de la portion intermédiaire 133 et le plan médian YY est strictement inférieure à la distance X11 entre la surface d'extrémité axiale de la semelle 11 et le plan médian YY (X133 + E133 < X11).

De préférence, la distance minimale X133 + E133 entre la surface extérieure de la portion intermédiaire 133 et le plan médian YY est strictement inférieure à la distance maximale X135 entre la surface intérieure de la portion distale 135 et le plan médian YY (X133 + E133 < X135). Le point d'inflexion 130 à la jonction de la portion intermédiaire 133 et de la portion distale 135 est situé à une distance axiale X130 du plan médian YY comprise entre la distance minimale X133 + E133 séparant la surface extérieure de la portion intermédiaire 133 et le plan médian YY et la distance maximale X135 séparant la surface intérieure de la portion distale 135 et le plan médian YY (X133 + E133 < X130 < X135).

De préférence, la distance maximale X131 entre la surface intérieure de la portion proximale 131 et le plan médian YY est strictement supérieure à la distance minimale X133 entre la surface intérieure de la portion intermédiaire 133 et le plan médian YY (X131 > X133). La distance maximale X131 + E131 entre la surface extérieure de la portion proximale 131 et le plan médian YY est strictement supérieure à la distance la distance minimale X133 + E133 entre la surface extérieure de la portion intermédiaire 133 et le plan médian YY (X133 + E133 < X131 + E131). L'épaisseur E133 de la portion intermédiaire 133 est sensiblement identique à l'épaisseur E135 de la portion distale 135 (E133 = E135).

Les relations dimensionnelles décrites ci-dessus et représentées schématiquement en figure 19 sont transposables aux modes de réalisation représentés dans les figures précédentes. Dans le cas d'un pneumatique 1 symétrique par rapport au plan médian YY, les relations dimensionnelles précitées sont transposables aux largeurs du pneumatique 1 en multipliant par deux les dimensions précitées.

De manière générale, le profil des pneumatiques 1 selon l'invention comprend une position radiale intermédiaire entre la semelle 11 et la bande de roulement 7 pour laquelle l'enveloppe 17 est de largeur réduite par rapport aux positions radiales adjacentes.

Chaque pneumatique 1 est réalisé en un matériau souple approprié. Le matériau utilisé peut comprendre soit un caoutchouc naturel, soit un ou plusieurs caoutchouc synthétique, soit encore un de leur mélange. La composition chimique des pneumatiques 1 est choisie en combinaison des formes précédemment décrites de sorte que la déformation dudit pneumatique 1 en travail, c'est-à-dire en roulage sur la terre, permette un décollage efficace de la boue.

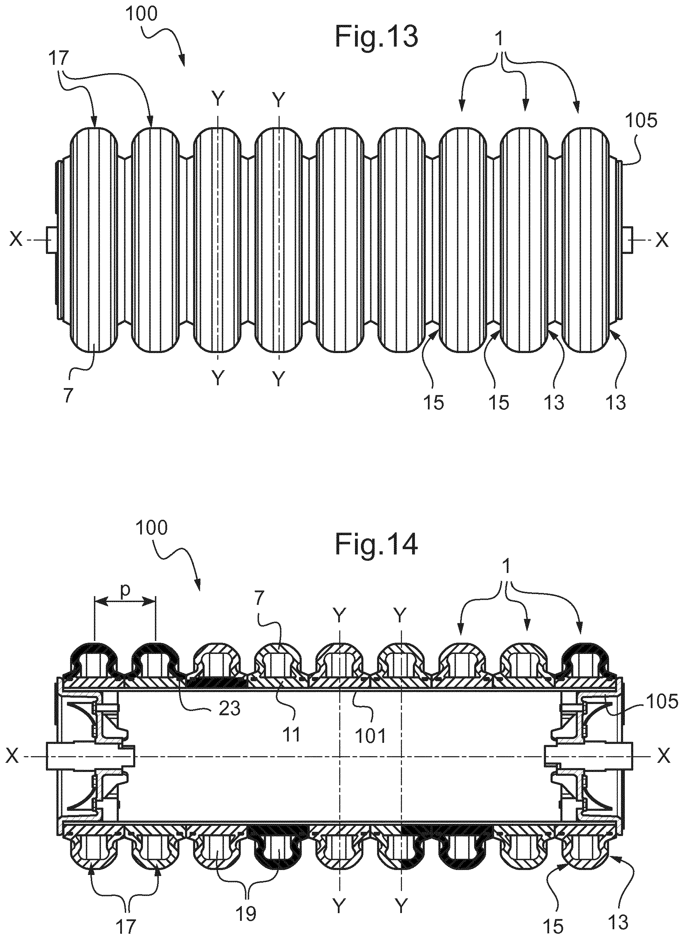

On se réfère maintenant aux figures 13 à 18. Dans chacun des trois modes de réalisation représentés, les pneumatiques 1, 99 utilisés sont dépourvus de crampons 3 et de sculptures 5. Les modes de réalisation des pneumatiques 1 munis de tels crampons 3 et/ou sculptures 5, par exemple ceux représentés aux figures 5 à 10, sont compatibles avec les organes roulant 100 décrits dans la suite.

L'organe roulant 100 pour machine agricole, ici un rouleau, comprend un support 101 et au moins un pneumatique 1 tel que décrit précédemment. Le support 101 est sensiblement cylindrique et propre à tourner autour d'un axe de rotation. À l'état assemblé, l'axe de rotation du support 101 est confondu avec l'axe de révolution XX des pneumatiques 1, 99. Le support cylindrique 101 est ici pourvu, à chacune de ses extrémités, d'un flasque 105 destiné à assurer le contact avec un arbre de rotation.

On se réfère maintenant aux figures 13 et 14. Les pneumatiques 1 sont enfilés successivement autour du support 101. Les pneumatiques 1 sont montés adjacents et en contact les uns avec les autres. Dans l'exemple décrit ici, l'extrémité de la semelle 11 d'un pneumatique 1 est mise en contact avec son homologue d'un autre pneumatique 1 adjacent. Les pneumatiques 1 situés à chacune des extrémités du rouleau 100 sont en contact avec le flasque 105. Le flasque 105 fait alors office de butée axiale. En variante, les pneumatiques disposés à chacune des extrémités du rouleau 100 peuvent présenter une structure spécifiquement adaptée. Par exemple, les pneumatiques d'extrémités peuvent présenter une antisymétrie par rapport à leur plan médian YY.

Comme cela est représenté en figure 14, la succession de pneumatiques 1 dans la direction axiale XX est agencée de sorte que le bandage du rouleau 100 présente un motif élémentaire répété dans la direction de l'axe de révolution XX et un pas p de répétition correspondant à la distance "crête à crête" ou "creux à creux". Les pneumatiques 1 peuvent créer dans le sol des sillons sensiblement parallèles entre eux et équidistants, sillons dans lesquels pourront par exemple être semées des graines. L'espacement entre les centres des sillons correspond à l'intervalle entre chaque motif et au pas p. Sur les figures 13 et 14, le motif correspond à la largeur d'un pneumatique 1.

Le rouleau 100 présente ici un pas p compris entre 60 et 250 millimètres, par exemple 125, 143, 150 ou 167 millimètres. La valeur du pas p est choisie pour correspondre à la largeur souhaitée entre deux sillons et notamment en fonction des valeurs standards du domaine pour s'adapter aux autres machines agricoles existantes, par exemple les semoirs.

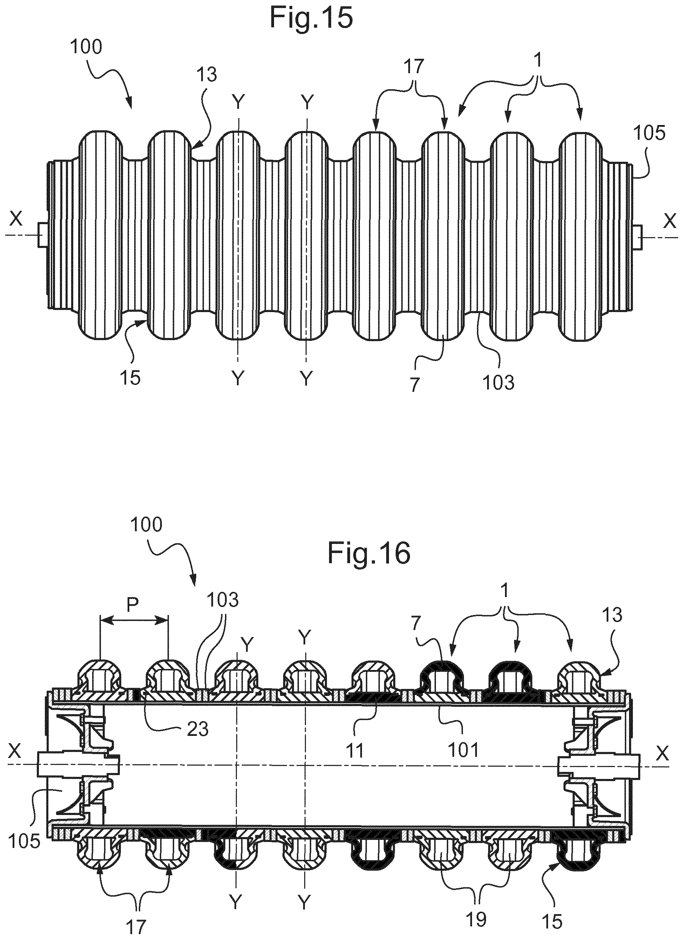

On se réfère aux figures 15 et 16. L'espacement entre les sillons peut être ajusté par l'interposition entre les pneumatiques 1 adjacents d'éléments annulaires intercalaires dont la largeur est choisie. La largeur des sillons traitée par les pneumatiques 1 peut être choisie en fonction des applications pour permettre, par exemple, d'adapter l'écartement entre deux lignes de semis.

Sur les figures 15 et 16, les éléments communs avec ceux du mode de réalisation des figures 13 et 14 sont numérotés de manière identique. Dans ce mode de réalisation, les pneumatiques 1 sont mutuellement espacés. Des entretoises 103, ou cerclages, sont montées autour du support 101 et intercalées entre chacun des pneumatiques 1. Les entretoises 103 prennent ici la forme d'anneaux réalisés de préférence dans un matériau présentant des propriétés mécaniques semblables à celles des pneumatiques 1, par exemple du caoutchouc naturel ou synthétique armé d'insert(s) métallique(s). Les entretoises 103 peuvent en variante être réalisées en une matière plastique présentant une élasticité sensiblement inférieure à celle des pneumatiques 1. La largeur dans la direction axiale et/ou le nombre d'entretoises 103 entre chaque pneumatique 1 sont choisis de sorte que le pas P du rouleau 100 soit homogène sur le rouleau 100. La présence ou l'absence d'entretoise 103 avec des pneumatiques 1 identiques par ailleurs permet de choisir la valeur du pas P.

Dans l'exemple représenté ici, deux entretoises 103 sont interposées entre chaque pneumatique 1. Trois entretoises 103 sont disposées entre chaque pneumatique d'extrémité et le flasque 105 qui lui est adjacent. Le pas P du rouleau 100 correspond à la somme de la largeur d'un pneumatique 1 et de la largeur de deux entretoises 103.

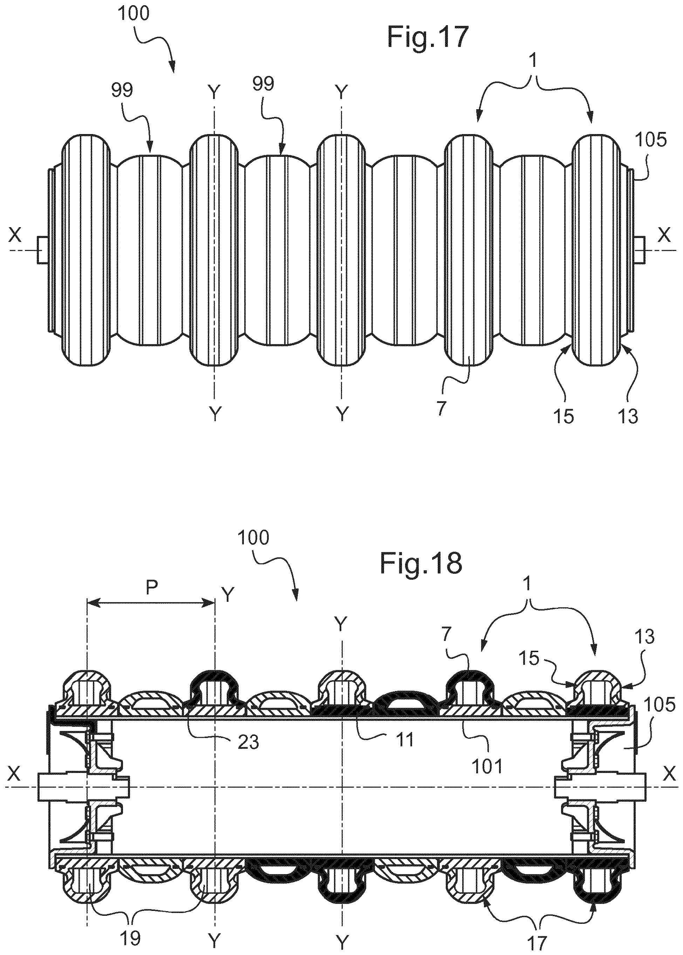

On se réfère aux figures 17 et 18. Dans le mode de réalisation représentée ici, des pneumatiques 1 tels que décrits précédemment et des pneumatiques 99 différents sont alternativement juxtaposés dans la direction axiale XX du rouleau 100. Dans l'exemple représenté ici, le rouleau 100 est dépourvu d'entretoise 103. En variante, des entretoises 103 peuvent être utilisées.

Le pas P du rouleau 100 correspond à la somme de la largeur d'un pneumatique 1 et la largeur d'un pneumatique 99. En fonction de la forme des pneumatiques 1, 99, plusieurs sillons par pas P, similaires ou non, peuvent être créés dans la terre.

Dans un mode de réalisation non représenté, un rouleau comprenant des pneumatiques 1 tel que représenté aux figures 11 et 12 permet de former deux sillons similaires et parallèles par pneumatique 1.

Les figures 20 et 21 montrent chacune un mode de réalisation d'un pneumatique 1. Les parties semblables à celles déjà décrites sont numérotées de la même manière. L'organe roulant 100 est ici une roue. Le support 101 est ici une jante 71. Le pneumatique 1 est monté sur la jante 71. La jante 71, comme le support 101 des modes de réalisation précédents, supporte le pneumatique 1. Dans l'exemple des figures 20 et 21, une jante 71 supporte un seul pneumatique 1. En variante, une jante 71 de roue 100 supporte plusieurs pneumatiques 1 juxtaposés.

Les pneumatiques 1 comprennent ici un talon 51 s'étendant radialement vers l'axe de révolution XX depuis la surface radialement intérieure de la semelle 11. Le talon 51 est de forme complémentaire à un logement 61 formé dans la surface radialement extérieure de la jante 71.

La jante 71 est formée ici de deux anneaux 73 et 75. Les deux anneaux 73 et 75 sont de formes complémentaires et s'assemblent de part et d'autre du talon 51. La zone de contact entre les deux anneaux 73 et 75 correspond sensiblement au plan médian YY du pneumatique 1. Les anneaux 73 et 75 sont maintenus ensemble par des moyens de fixation 77, ici des vis et écrous. La jante 71 comprend en outre une plaque 79 en forme générale de disque maintenue entre les deux anneaux 73 et 75. La plaque 79 est sensiblement perpendiculaire et centrée sur l'axe de révolution XX.

Plusieurs jante 71 munis de pneumatiques 1 peuvent être solidarisées les unes aux autres et/ou avec des supports 101 cylindriques. L'assemblage forme alors un support unitaire supportant plusieurs pneumatiques 1. L'assemblage muni de ses pneumatiques 1 forme alors un organe roulant 100 unitaire.

Les modes de réalisation représentés aux figures 13 à 18 sont quelques exemples de combinaisons possibles de pneumatiques 1, 99 pour former un rouleau 100 pour machine agricole. En fonction du travail souhaité de la terre, d'autres combinaisons pourront être envisagées par l'homme de l'art.

Les pneumatiques 1 de l'invention peuvent être réalisés en différentes dimensions, typiquement avec des diamètres extérieurs compris entre 200 et 1000 millimètres et pouvant s'adapter autour de supports 101 de rouleaux 100 existants, standards ou non. Par exemple, ces supports 101 possèdent des diamètres pouvant être compris entre 150 et 900 millimètres.

Bien entendu, l'invention n'est pas limitée aux formes de réalisation décrites précédemment à titre d'exemples et s'étend à d'autres variantes sans sortir du cadre des revendications ci-jointes.

On comprendra que la forme précise du pneumatique peut être adaptée en fonction de différents critères liés à l'utilisation souhaitée de l'organe roulant.

L'invention trouve une application particulière aux rouleaux et roues à usage agricole, en particulier aux rouleaux pour semoirs agricoles, pour permettre de réaliser des sillons destinés à recevoir des graines ou semences. Ces roues et rouleaux peuvent être également utilisés pour ré-appuyer le sol après semis. Ils peuvent être utilisés seuls ou en combinaison avec un semoir ou un outil de préparation du sol, animé ou non.

L'invention ne se limite pas aux exemples de pneumatiques et d'organe roulant décrits ci-avant, seulement à titre d'exemples, mais elle englobe toutes les variantes que pourra envisager l'homme de l'art dans le cadre des revendications ci-après.

## Revendications

1. Pneumatique (1) pour machine agricole, présentant un axe de révolution (XX) et comprenant une bande de roulement (7), une semelle (11) située à l'opposé de la bande de roulement (7), et deux parois de flancs (13, 15) reliant la bande de roulement (7) à la semelle (11), la bande de roulement (7), la semelle (11) et les deux parois de flancs (13, 15) formant ensemble une enveloppe (17) définissant une chambre (19) à l'intérieur du pneumatique (1),
**caractérisé en ce que** la chambre (19) est en communication avec l'extérieur du pneumatique (1) en fonctionnement dudit pneumatique, **en ce que** l'une au moins des parois de flancs (13, 15) comprend, dans cet ordre et successivement selon une direction orientée radialement depuis l'axe de révolution (XX) vers l'extérieur, une portion proximale (131), une portion intermédiaire (133) et une portion distale (135), avec un point d'inflexion (130) qui délimite la portion intermédiaire (133) et la portion distale (135),
et **en ce que** la portion intermédiaire (133) fait saillie dans la chambre (19) selon une direction sensiblement parallèle à l'axe de révolution (XX) à l'état déchargé de sorte qu'en fonctionnement la paroi de flanc présente une déformation augmentée de manière contrôlée.

2. Pneumatique (1) selon la revendication 1, dans lequel la portion intermédiaire (133) et la portion distale (135) sont d'épaisseur sensiblement identique l'une par rapport à l'autre et homogène.

3. Pneumatique (1) selon l'une des revendications précédentes, dans lequel ladite paroi de flanc (13 ; 15) présente, en section selon un plan comprenant l'axe de révolution (XX) du pneumatique (1) à l'état déchargé, un profil en S.

4. Pneumatique (1) selon l'une des revendications précédentes, comprenant en outre au moins une armature (23) logée dans la semelle (11).

5. Pneumatique (1) selon l'une des revendications précédentes, dans lequel la portion proximale (131) s'étend sensiblement radialement depuis la semelle (11) et porte une surface extérieure en prolongement d'une surface d'extrémité axiale de la semelle (11).

6. Pneumatique (1) selon l'une des revendications 1 à 4, dans lequel, selon une direction parallèle à l'axe de révolution (XX), la semelle (11) présente une dimension en largeur strictement supérieure à la distance maximale séparant les deux parois de flancs (13, 15), à l'état déchargé.

7. Pneumatique (1) selon l'une des revendications précédentes, dans lequel la portion intermédiaire (133) est agencée pour s'étendre vers la chambre (19) sous l'effet d'une compression radiale, la portion distale (135) étant agencée pour s'étendre vers l'opposé de la chambre (19) sous l'effet d'une compression radiale.

8. Organe roulant (100) pour machine agricole, comprenant un support (101) sensiblement cylindrique propre à tourner autour d'un axe (XX) et au moins un pneumatique (1) selon l'une des revendications précédentes monté autour du support (101).

9. Organe roulant selon la revendication 8, comprenant en outre au moins une entretoise (103) montée autour du support (101), adjacente et au contact dudit pneumatique (1) de manière que ledit pneumatique (1) soit maintenu à distance d'un autre pneumatique (99) monté autour du support (101).

10. Organe roulant selon l'une des revendications 8 et 9, pour lequel le support (101) prend la forme d'une jante (71) autour de laquelle est monté le pneumatique (1).

11. Organe roulant selon l'une des revendications 8 et 9, pour lequel le support (101) comprend un assemblage de jantes (71), ledit pneumatique (1) étant monté autour d'au moins une des jantes (71).

## Patentansprüche

1. Luftreifen (1) für Landmaschine mit einer Drehachse (XX) und umfassend eine Lauffläche (7), eine der Lauffläche (7) gegenüberliegende Sohle (11) und zwei Flankenwänden (13, 15), die die Lauffläche (7) mit der Sohle (11) verbinden, wobei die Lauffläche (7), die Sohle (11) und die beiden Flankenwände (13, 15) zusammen einen Mantel bilden (17), der eine Kammer (19) im Inneren des Luftreifens (1) definiert, **dadurch gekennzeichnet, dass** die Kammer (19) während des Reifenbetriebs mit der Außenseite des Luftreifens in Verbindung steht (1),
**wobei:**
mindestens eine der Flankenwände (13, 15) in folgender Reihenfolge nacheinander von der Drehachse (XX) in radialer Richtung nach außen einen proximalen Teil (131), einen mittleren Teil (133) und einen distalen Teil (135) umfasst, mit einem Wendepunkt (130), der den mittleren Teil (133) und den distalen Teil (135) begrenzt,
und **wobei:**
der mittlere Teil (133) in einer Richtung im Wesentlichen parallel zur Drehachse (XX) im unbelasteten Zustand in die Kammer (19) hineinragt, so dass die Flankenwand während des Betriebs eine auf kontrollierte Weise verstärkte Deformation hat.

2. Luftreifen (1) nach Anspruch 1, wobei der mittlere Teil (133) und der distale Teil (135) im Wesentlichen die gleiche Dicke haben und die Dicke homogen ist.

3. Luftreifen (1) nach einem der vorhergehenden Ansprüche, in dem die Flankenwand (13; 15) im Querschnitt durch eine Ebene, die die Drehachse (XX) des Luftreifens (1) im unbelasteten Zustand umfasst, ein S-Profil hat.

4. Luftreifen (1) nach einem der vorhergehenden Ansprüche, der ferner mindestens eine Armierung (23) umfasst, die in der Sohle (11) platziert ist.

5. Luftreifen (1) nach einem der vorhergehenden Ansprüche, in dem der proximale Teil (131) sich im Wesentlichen radial von der Sohle (11) erstreckt und eine Außenfläche hat, die eine Verlängerung einer axialen Endfläche der Sohle (11) darstellt.

6. Luftreifen (1) nach einem der Ansprüche 1 bis 4, wobei die Sohle (11) in einer Richtung parallel zur Drehachse (XX) im unbelasteten Zustand eine Breite hat, die obligatorisch größer ist als der maximale Abstand zwischen den beiden Flankenwänden (13, 15).

7. Luftreifen (1) nach einem der vorhergehenden Ansprüche, wobei der mittlere Teil (133) so angeordnet ist, dass er sich durch radiale Kompression in Richtung der Kammer (19) erstreckt, und der distale Teil (135) so angeordnet ist, dass er sich durch radiale Kompression zu der der Kammer (19) gegenüberliegenden Seite erstreckt.

8. Wälzkörper (100) für Landmaschine, umfassend einen im wesentlichen zylindrischen Träger (101), der um eine Achse (XX) drehbar ist, und mindestens einen Luftreifen (1) nach einem der vorhergehenden Ansprüche, der um den Träger (101) herum montiert ist.

9. Wälzkörper nach Anspruch 8, umfassend ferner mindestens einen Abstandshalter (103), der um den Träger (101) herum und in direktem Kontakt zum Luftreifen (1) montiert ist, so dass der Luftreifen (1) auf Abstand zu einem anderen um den Träger (101) montierten Luftreifen (99) gehalten wird.

10. Wälzkörper nach einem der Ansprüche 8 und 9, wobei der Träger (101) die Form einer Felge (71) hat, um die herum der Luftreifen (1) montiert ist.

11. Wälzkörper nach einem der Ansprüche 8 und 9, wobei der Träger (101) eine Anordnung von Felgen (71) umfasst und der Luftreifen (1) um mindestens eine der Felgen (71) herum montiert ist.

## Claims

1. A tire (1) for an agricultural machine, having an axis of revolution (XX) and comprising a tread (7), a sole (11) situated opposite the tread (7), and two sidewalls (13, 15) connecting the tread (7) to the sole (11), the tread (7), the sole (11) and the two sidewalls (13, 15) together forming a casing (17) defining a chamber (19) inside the tire (1),
**characterized in that** the chamber (19) is in communication with the exterior of the tire (1) during operation of the tire (1), **in that** at least one of the sidewalls (13, 15) comprises, in this order and in succession in a direction oriented radially from the axis of revolution (XX) to the outside, a proximal portion (131), an intermediate portion (133) and a distal portion (135), with an inflection point which delimits the intermediate portion (133) and the distal portion (135),
and **in that** the intermediate portion (133) projecting into the chamber (19) in a direction substantially parallel to the axis of revolution (XX) in the unloaded state so that during operation the sidewall has a deformation increasing in a controlled manner.

2. The tire (1) as claimed in claim 1, wherein the intermediate portion (133) and the distal portion (135) are of substantially identical and homogeneous thickness.

3. The tire (1) as claimed in any one of the preceding claims, wherein said sidewall (13; 15) has, in cross-section according to a plane including the axis of revolution (XX) of the tire (1) in the unloaded state, an S-shaped profile.

4. The tire (1) as claimed in any one of the preceding claims, further comprising at least one reinforcement (23) housed in the sole (11).

5. The tire (1) as claimed in any one of the preceding claims, wherein the proximal portion (131) extends substantially radially from the sole (11) and carries an outer surface as a continuation of an axial end surface of the sole (11).

6. The tire (1) as claimed in any one of claims 1 to 4, wherein, in a direction parallel to the axis of revolution (XX), the sole (11) has a width dimension that is strictly greater than the maximum distance separating the two sidewalls (13, 15), in the unloaded state.

7. The tire (1) as claimed in any one of the preceding claims, wherein the intermediate portion (133) is arranged to extend towards the chamber (19) under the effect of a radial compression, the distal portion (135) being arranged to extend away from the chamber (19) under the effect of a radial compression.

8. A rolling member (100) for an agricultural machine, comprising a substantially cylindrical support (101) capable of rotating about an axis (XX) and at least one tire (1) as claimed in any one of the preceding claims mounted around the support (101).

9. The rolling member as claimed in claim 8, further comprising at least one spacer (103) mounted around the support (101), adjacent to and in contact with said tire (1), in such a manner that said tire (1) is kept at a distance from another tire (99) mounted around the support (101).

10. The rolling member as claimed in either claim 8 or claim 9, wherein the support (101) is in the form of a wheel rim (71) around which the tire (1) is mounted.

11. The rolling member as claimed in either claim 8 or claim 9, wherein the support (101) comprises an assembly of wheel rims (71), said tire (1) being mounted around at least one of the wheel rims (71).
